# EUROPEAN PATENT APPLICATION

(11) **EP 4 369 461 A1**
(43) Date of publication of application: **15.05.2024**
(21) Application number: 23755644.4
(22) Date of filing: 06.01.2023
(51) Int. Cl.: H01M 10/058, H01M 50/107

(54) **BATTERY CELL, BATTERY, ELECTRICAL DEVICE, AND MANUFACTURING METHOD FOR BATTERY CELL**

(30) Priority: 21.02.2022 CN 202210159071
(71) Applicant: Contemporary Amperex Technology Co., Limited, Ningde City, Fujian 352100 (CN)
(72) Inventor: LV, Nangui, Ningde City, Fujian 352100 (CN); ZHAO, Yan, Ningde City, Fujian 352100 (CN); HUANG, Caixia, Ningde City, Fujian 352100 (CN); TANG, Minghao, Ningde City, Fujian 352100 (CN)
(74) Representative: Rowlands, Stuart Michael
(86) International application number: PCT/CN2023/071035
(87) International publication number: WO 2023/155640

(57) **Abstract**

The present application discloses a battery cell, a battery, an electrical device, and a manufacturing method for the battery cell. The battery cell comprises: an electrode assembly, wherein the electrode assembly is of a winding type structure, and comprises a first electrode sheet, a second electrode sheet, and a separator, the separator being used for separating the first electrode sheet and the second electrode sheet; and an insulating film, wherein the insulating film is wound and wrapped outside the electrode assembly, and a winding start section of the insulating film is connected to the winding end section of the separator. The technical solution provided by the present application can improve the production efficiency of the battery.

## Description

### Cross-Reference to Related Application

The present application claims the priority of Chinese Patent Application No. 202210159071.0 filed on February 21, 2022 and entitled "BATTERY CELL, BATTERY, ELECTRICAL DEVICE, AND METHOD FOR MANUFACTURING BATTERY CELL", the entire content of which is incorporated herein by reference.

### Technical Field

The present application relates to the technical field of batteries, and specifically, to a battery cell, a battery, an electrical device, and a method for manufacturing a battery cell.

### Background

With saving energy and reducing emissions is the key to the sustainable development of the automobile industry, electric vehicles have become an important part of the sustainable development of automotive industry due to their energy saving and environmental protection advantages. For electric vehicles, battery technology is another important factor related to their development.

In the battery manufacturing process, the production efficiency of batteries is an issue that cannot be ignored. Therefore, how to improve the production efficiency of batteries is an urgent technical problem to be solved in the battery technology.

### Summary of the Invention

The present application provides a battery cell, a battery, an electrical device, and a method for manufacturing a battery cell, which can improve the production efficiency of batteries.

The present application is realized through the following technical solutions:

In a first aspect, the present application provides a battery cell, including: an electrode assembly and an insulating film, where the electrode assembly is of a winding structure, the electrode assembly includes a first electrode plate, a second electrode plate, and a separator, and the separator is used to isolate the first electrode plate from the second electrode plate; and the insulating film is wound around the outside of the electrode assembly by wrapping, and a winding starting section of the insulating film is connected to a winding ending section of the separator.

In the technical solution of the embodiment of the present application, the insulating film can play a role in sealing, protecting and insulating the electrode assembly. For example, the insulating film may be a Mylar film. By connecting the winding starting section of the insulating film to the winding ending section of the separator, the insulating film can be wound with the electrode assembly when the electrode assembly is wound and formed, such that the electrode assembly is wrapped. Compared with a solution for separately wrapping the outside of the electrode assembly with the insulating film, the manufacturing time of the battery cell can be effectively shortened, and the production efficiency of the battery is improved.

In some embodiments, the winding starting section of the insulating film is adhered to the winding ending section of the separator.

The separator and the insulating film can be conveniently and efficiently connected together in an adhesion manner, which can effectively improve the production efficiency of the battery.

In some embodiments, the insulating film is wound for at least one turn.

By winding the insulating film around the electrode assembly for at least one turn, the effects of insulating, sealing, and protecting the electrode assembly by the insulating film can be effectively ensured.

In some embodiments, the separator includes a first separator and a second separator, and the first electrode plate, the first separator, the second electrode plate, and the second separator are stacked. A winding ending section of the first separator is located on an outer side of a winding ending section of the second separator, and the winding starting section of the insulating film is connected to the winding ending section of the first separator.

The first electrode plate and the second electrode plate can be effectively isolated from the outside by the first separator and the second separator, which ensures normal charging and discharging of the electrode assembly. The winding starting section of the insulating film is connected to the winding ending section of the first separator located on the outer side, which can ensure that the insulating film is smoothly wrapped around the outside of the electrode assembly, and ensures the smoothness of the outside of the battery cell, and the quality of the battery cell.

In some embodiments, the separator includes a first separator and a second separator, and the first electrode plate, the first separator, the second electrode plate, and the second separator are stacked. A winding ending section of the second separator is located on an outer side of a winding ending section of the first separator, and the winding starting section of the insulating film is connected to the winding ending section of the second separator.

The first electrode plate and the second electrode plate can be effectively isolated from the outside by the first separator and the second separator, which ensures normal charging and discharging of the electrode assembly. The winding starting section of the insulating film is connected to the winding ending section of the second separator located on the outer side, which can ensure that the insulating film is smoothly wrapped around the outside of the electrode assembly, and ensures the smoothness of the outside of the battery cell, and the quality of the battery cell.

In some embodiments, the battery cell further includes: a packaging film. The packaging film is wound around the outside of the insulating film by wrapping, and a winding starting section of the packaging film is connected to insulating film, where the insulating film is configured to insulate and isolate the electrode assembly from the packaging film.

The packaging film may be used as a shell of the battery cell for packaging and protection. For example, the packaging film may be an aluminum-plastic film. By connecting the winding starting section of the packaging film with the insulating film, the insulating film and the packaging film can be wound with the electrode assembly when the electrode assembly is wound and formed, such that the electrode assembly is wrapped. Compared with a solution for separately wrapping the insulating film and separately packaging with the packaging film, the manufacturing time of the battery can be effectively shortened, and the production efficiency of the battery is improved.

In some embodiments, the winding starting section of the packaging film is connected to the winding ending section of the insulating film.

By connecting the winding starting section of the packaging film with the winding ending section of the insulating film, the packaging film can be wound around the surface of the insulating film after the insulating film is completely wound around the outside of the electrode assembly, thereby ensuring that the surface of the battery cell is smooth without wrinkles.

In some embodiments, the winding starting section of the packaging film is adhered to the insulating film.

The packaging film and the insulating film can be conveniently and efficiently connected together in an adhesion manner, which can effectively improve the production efficiency of the battery.

In some embodiments, the packaging film is wound for at least one turn.

By winding the packaging film for at least one turn, the effect of protecting the insulating film and the electrode assembly through the packaging film can be effectively guaranteed. Moreover, the more turns the packaging film is wound, the better the protection effect on the insulating film and the electrode assembly can be improved, thereby improving the structural strength of the battery cell.

In some embodiments, the winding ending section of the packaging film is fixed to the surface of the packaging film on its inner side.

By fixing the winding ending section of the packaging film to the surface of the packaging film on its inner side, the packaging film, the insulating film, and the electrode assembly are restrained, thereby ensuring that the battery cell is not loosened, and guaranteeing the quality of the battery cell.

In some embodiments, the winding ending section of the packaging film is welded to the surface of the packaging film on its inner side.

The packaging film is connected to the surface of the packaging film on its inner side in a welding manner, thereby ensuring a constraint effect and the quality of the battery cell.

In some embodiments, the electrode assembly includes a first end face, a second end face, and an outer peripheral surface. The first end face and the second end face are arranged oppositely along the winding axis direction of the electrode assembly; and the insulating film includes an insulating film body and a plurality of first extension parts extending from the edge of the insulating film body. The insulating film body covers the outer peripheral surface, and the plurality of first extension parts are continuously arranged along the edge of the insulating film body and jointly cover the first end face.

After the insulating film is wound around the outside of the electrode assembly, the plurality of first extension parts are bent and arranged relative to each other, thereby jointly covering the first end face of the electrode assembly, isolating the first end face of the electrode assembly from the outside, sealing, protecting, and insulating the electrode assembly, preventing external materials from influencing the electrode assembly, and ensuring safety of the electrode assembly.

In some embodiments, each first extension part is triangular, and the plurality of first extension parts are spliced into a circular plane.

The electrode assembly is formed by winding, the first end face of the electrode assembly is circular, and pointed ends of the triangular first extension parts are bent towards the center of the first end face to form a circle to effectively cover the first end face of the electrode assembly, thereby ensuring protection, sealing, and insulation effects on the electrode assembly. By setting the first extension part as a triangle (the triangle is a shape obtained by dividing, from the circle center, the circle along the radial direction), and compared with solutions for setting the first extension part as other shapes, the difficulty of covering the first end face after the bending of the first extension part can be effectively reduced.

In some embodiments, the packaging film includes a packaging film body and a plurality of second extension parts extending from the edge of the packaging film body. The packaging film body covers the insulating film body. The plurality of second extension parts are continuously arranged along the edge of the packaging film body and jointly cover the plurality of first extension parts.

After the packaging film is wound around the surface of the insulating film, the plurality of second extension parts are bent and arranged relative to each other so as to jointly cover all the first extension parts, thereby isolating the first end face and the first extension parts of the electrode assembly from the outside, sealing and protecting the electrode assembly and the insulating film, preventing the external materials from influencing the electrode assembly, and ensuring safety of the battery cell.

In some embodiments, each second extension part is triangular, and the plurality of second extension parts are spliced into a circular plane.

The battery cell is formed by winding, the first end face is circular, and the shape, corresponding to the first end face, formed by splicing the plurality of first extension parts is circular as well. Pointed ends of the plurality of triangular second extension parts are all bent towards the center of the first end face to form a circle so as to effectively cover the first extension parts, thereby effectively protecting the first extension parts and ensuring safety of the battery cell. By setting the second extension part as a triangle (the triangle is a shape obtained by dividing, from the circle center, the circle along the radial direction), and compared with solutions for setting the second extension part as other shapes, the difficulty of covering the first extension part after the bending of the second extension part can be effectively reduced.

In some embodiments, two adjacent first extension parts are welded to each other; and/or two adjacent second extension parts are welded to each other.

The two adjacent first extension parts are connected through welding, which not only improves the efficiency of the mutual connection of the first extension parts but also ensures the connection strength between the two adjacent first extension parts, thereby ensuring the effects of protecting and sealing the first end face by the first extension parts. The two adjacent second extension parts are connected through welding, which not only improves the efficiency of the mutual connection of the second extension parts but also ensures the connection strength between the two adjacent second extension parts, thereby ensuring the effect of protecting the first extension parts by the second extension parts.

In a second aspect, the present application provides a battery, including any battery cell in the first aspect.

In a third aspect, the present application provides an electrical device, including the battery in the second aspect. The battery is used to provide electric energy.

In a fourth aspect, the present application provides a method for manufacturing a battery cell. The manufacturing method includes: providing a first electrode plate, a second electrode plate, a separator, and an insulating film, where the separator is used to isolate the first electrode plate from the second electrode plate; connecting a winding starting section of the insulating film to a winding ending section of the separator; winding the first electrode plate, the second electrode plate, and the separator to form an electrode assembly; and winding the insulating film to make the insulating film be wrapped around the outside of the electrode assembly.

In a fifth aspect, the present application provides a method for manufacturing a battery cell. The manufacturing method includes:

providing a first electrode plate, a second electrode plate, a separator, an insulating film, and a packaging film, where the separator is used to isolate the first electrode plate from the second electrode plate; connecting a winding starting section of the insulating film to a winding ending section of the separator; connecting a winding starting section of the packaging film to the insulating film; winding the first electrode plate, the second electrode plate, and the separator to form an electrode assembly; winding the insulating film and the packaging film to make the insulating film be wrapped around the outside of the electrode assembly, and make the packaging film be wrapped around the outside of the insulating film; and fixing a winding ending section of the packaging film to the surface of the packaging film on its inner side.

The above description is only a summary of the technical solutions of the present application. In order to understand the technical means of the present application more clearly, the technical means can be implemented according to the content of the specification. Furthermore, to make the above objectives and other objectives, features, and advantages of the present application more comprehensible, specific implementations of the present application are exemplified below.

### Description of Drawings

To more clearly describe the technical solutions of the embodiments of the present application, the drawings to be used in the embodiments of the present application will be briefly introduced below, and it should be understood that the following drawings only illustrate some embodiments of the present application, and therefore should not be considered as limiting the scope. For those of ordinary skill in the art, other relevant drawings may also be obtained based on these drawings without creative efforts.
FIG. 1 is a schematic structural diagram of a vehicle according to some embodiments of the present application;
FIG. 2 is an exploded view of a battery according to some embodiments of the present application;
FIG. 3 is a cross-sectional view of a battery cell according to some embodiments of the present application;
FIG. 4 is a schematic diagram of a separator, an insulating film, and a packaging film according to some embodiments of the present application;
FIG. 5 is a cross-sectional view of a battery cell according to some other embodiments of the present application;
FIG. 6 is a schematic diagram of a battery cell according to some embodiments of the present application;
FIG. 7 is a schematic diagram of a plurality of first extension parts according to some embodiments of the present application;
FIG. 8 is a flowchart of a method for manufacturing a battery cell according to some embodiments of the present application; and
FIG. 9 is a flowchart of a method for manufacturing a battery cell according to some embodiments of the present application.

Reference numerals: 10-battery cell; 11-electrode assembly; 110-first electrode plate; 111-second electrode plate; 112-separator; 12-insulating film; 13-packaging film; 1120-first separator; 1121-second separator; 11a-first end face; 11b-second end face; 11c-outer peripheral surface; 120-insulating film body; 121-first extension part; 130-packaging film body; 131-second extension part; 1000-vehicle; 300-controller; 200-motor; 100-battery; 50-box; 51-first part; and 52-second part.

### Detailed Description

Embodiments of the technical solutions of the present application will be described in detail below in conjunction with the drawings. The following embodiments are only used to more clearly describe the technical solutions of the present application, and therefore are only used as examples but cannot be used to limit the scope of protection of the present application.

Unless otherwise defined, all technical and scientific terms used herein have the same meaning as commonly understood by those skilled in the art belonging to the technical field of the present application; the terms used herein are only for the purpose of describing the specific embodiments and are not intended to limit the present application; and the terms "including" and "having" and any variations thereof in the specification and the claims of the present application and in the description of the accompanying drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive from other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "anticlockwise", "axial direction", "radial direction", "circumferential direction", etc. are based on the orientation or position relationship shown in the accompanying drawings and are intended to facilitate the description of the embodiments of the present application and simplify the description only, rather than indicate or imply that an apparatus or component referred to must have a particular orientation or be constructed and operated in a particular orientation, and therefore are not to be understood as limitations on the embodiments of the present application.

In the description of the embodiments of the present application, unless otherwise expressly specified and limited, the technical terms "mount", "join", "connect", "fix", etc. should be understood in a broad sense, such as, a fixed connection, a detachable connection, or an integrated connection; a mechanical connection, or an electrical connection; a direct connection, an indirect connection through an intermediate medium, an internal connection of two elements, or interaction between two elements. Those of ordinary skill in the art can understand the specific meanings of the above terms in the embodiments of the present application according to specific situations.

In the present application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited by the embodiments of the present application. The battery cell may be in a cylindrical, rectangular solid shape or in other shapes, which is also not limited by the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for encapsulating one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer. A surface of the positive electrode current collector is coated with the positive electrode active material layer. The parts, not coated with the positive electrode active material layer, of the positive electrode current collector protrude from the part, coated with the positive electrode active material layer, of the positive current collector, and the parts, not coated with the positive electrode active material layer, of the positive electrode current collector serve as positive tabs. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. The parts, not coated with the negative electrode active material layer, of the negative electrode current collector protrude from the part, coated with the negative electrode active material layer, of the negative electrode current collector, and the parts, not coated with the negative electrode active material layer, of the negative electrode current collector serve as negative tabs. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the separator may be polypropylene (PP), polyethylene (PE), or the like.

The battery cell further includes an insulating film and a packaging film. The insulating film covers the outside of the electrode assembly. The packaging film encapsulates the electrode assembly covered with the insulating film to form the battery cell. The insulating film may be a mylar film, and the packaging film may be an aluminum-plastic film. After the electrode assembly is rolled and formed, the mylar film and the aluminum-plastic film are packaged through the Mylar wrapping process and the shelling process. The mylar film plays the role of sealing and protecting the electrode assembly, and can effectively insulate the electrode assembly from the aluminum-plastic film to avoid short circuit within the battery cell. The aluminum plastic film plays a protective role.

In the battery production process, the production efficiency of batteries is a non-negligible issue. For battery manufacturing, the main factor that affects the production efficiency is the complex manufacturing process of battery cells.

The inventor found that during the manufacturing process of the battery cell, after the electrode assembly is rolled and formed, the mylar film and the aluminum-plastic film are packaged through the Mylar wrapping process and the shelling process, and the shelling process further includes an aluminum-plastic film forming process in which the aluminum-plastic film is stamped to form a cavity to accommodate the electrode assembly covered with the mylar film, and therefore the Mylar wrapping process and the shelling process consume longer time in the production of the battery cell, leading to the low production efficiency of batteries.

In view of this, in order to improve the manufacturing efficiency of the battery cell and the production efficiency of batteries, the inventor has designed a battery cell after in-depth research, including: an electrode assembly. The electrode assembly is of a winding structure, and includes a first electrode plate, a second electrode plate, and a separator. The separator is used to isolate the first electrode plate from the second electrode plate. The insulating film is wound around the outside of the electrode assembly by wrapping, and a winding starting section of the insulating film is connected to a winding ending section of the separator.

According to the technical solution of the embodiment of the present application, the insulating film can play a role in sealing, protecting and insulating the electrode assembly. For example, the insulating film may be a Mylar film. By connecting the winding starting section of the insulating film to the winding ending section of the separator, the insulating film can be wound with the electrode assembly when the electrode assembly is wound and formed, such that the electrode assembly is wrapped. Compared with a solution (i.e., the Mylar wrapping process) for separately wrapping the outside of the electrode assembly with the insulating film, the manufacturing time of the battery cell can be effectively shortened, and the production efficiency of batteries is improved.

The technical solutions described in the embodiments of the present application are applicable to the battery and an electrical device using the battery.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

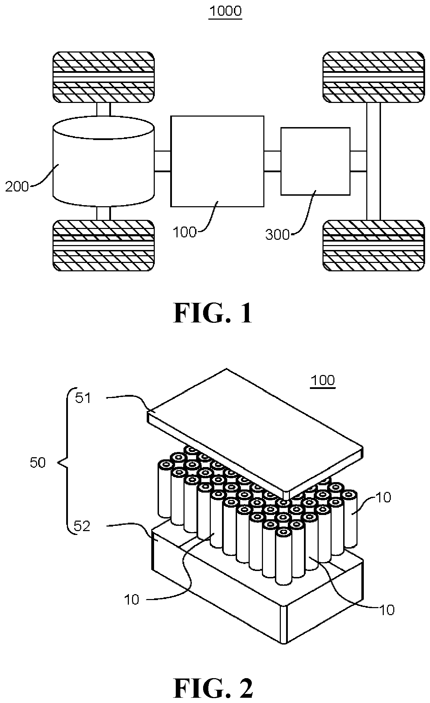

FIG. 1 is a schematic structural diagram of a vehicle 1000 according to some embodiments of the present application. A controller 300, a motor 200, and a battery 100 may be arranged in the vehicle 1000, and the controller 300 is configured to control the battery 100 to supply power to the motor 200. For example, the battery 100 may be arranged at a bottom or head or tail of the vehicle 1000. The battery 100 may be configured to supply power to the vehicle 1000. For example, the battery 100 may be used as an operating power source of the vehicle 1000, which is used for a circuit system of the vehicle 1000, for example, for operation power requirements of the vehicle 1000 during starting, navigation and running. In another embodiment of the present application, the battery 100 can not only be used as the operating power source of the vehicle 1000, but also can be used as a driving power source of the vehicle 1000 to provide driving power for the vehicle 1000 by replacing or partially replacing fuel or natural gas.

Please refer to FIG. 2, and FIG. 2 is an exploded view of a battery 100 according to some embodiments of the present application. The battery 100 includes a box 50 and battery cells 10, and the battery cells 10 are accommodated in the box 50. The box 50 is used to provide an accommodating space for the battery cells 10, and the box 50 may be of various structures. In some embodiments, the box 50 may include a first part 51 and a second part 52. The first part 51 and the second part 52 are covered by each other, and together define the accommodating space for accommodating the battery cells 10. The second part 52 may be of a hollow structure with one end open, the first part 51 may be of a plate-like structure, and the first part 51 covers the opening side of the second part 52, such that the first part 51 and the second part 52 together define the accommodating space. Each of the first part 51 and the second part 52 may also be of a hollow structure with one side open, and the opening side of the first part 51 covers the opening side of the second part 52. Of course, the box 50 formed by the first part 51 and the second part 52 may be in various shapes, such as a cylinder or a rectangular solid.

In the battery 100, there may be a plurality of battery cells 10, and the plurality of battery cells 10 may be connected in series or parallel or in a parallel-series connection, and the parallel-series connection means that the plurality of battery cells 10 are connected in both series and parallel. The plurality of battery cells 10 may be directly connected in series, or in parallel or in the parallel-series connection, and then are assembled as a whole to be accommodated in the box 50; and of course, the battery 100 may also be a whole formed in the manner that the plurality of battery cells 10 are connected in series, or in parallel or in the parallel-series connection to form battery modules, and the plurality of battery modules are then connected in series, or in parallel or in the parallel-series connection, and is accommodated in the box 50. The battery 100 may further include other structures. For example, the battery 100 may further include a convergence component for electrically connecting the plurality of battery cells 10. Each battery cell 10 may be a secondary battery or a primary battery; and may also be a lithium-sulfur battery, a sodium-ion battery, or a magnesium-ion battery, but is not limited thereto. The battery cell 10 may be in a cylindrical, flat or rectangular solid shape, or in other shapes, or the like.

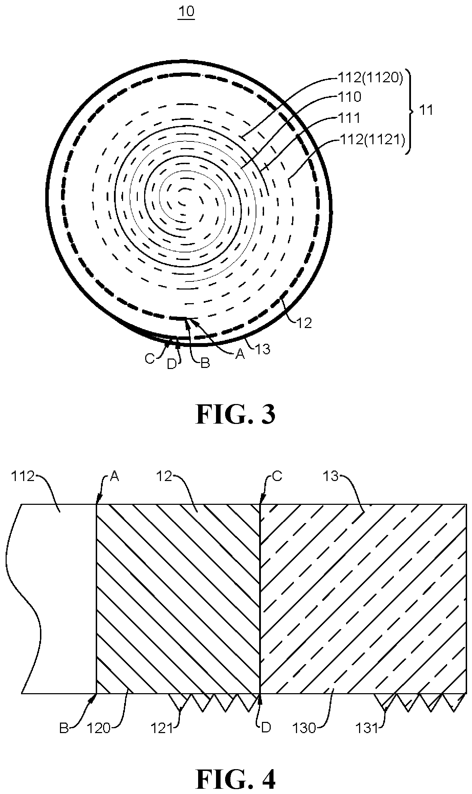

As shown in FIG. 3 and FIG. 4, FIG. 3 is a cross-sectional view of a battery cell 10 according to some embodiments of the present application, and FIG. 4 is a schematic diagram of a separator 112, an insulating film 12, and a packaging film 13 according to some embodiments of the present application. The battery cell 10 includes an electrode assembly 11 and the insulating film 12. The electrode assembly 11 is of a winding structure, and includes a first electrode plate 110, a second electrode plate 111, and the separator 112. The separator 112 is used to isolate the first electrode plate 110 from the second electrode plate 111. The insulating film 12 is wound around the outside of the electrode assembly 11 by wrapping, and a winding starting section of the insulating film 12 is connected to a winding ending section of the separator 112.

The winding ending section of the separator 112 is marked with a symbol A in the figure, and the winding starting section of the insulating film 12 is marked with a symbol B in the figure. The electrode assembly 11 is of the winding structure, which refers to the first electrode plate 110 and the second electrode plate 111 being stacked and separated by the insulating film 12, and then wound to form the electrode assembly 11. The first electrode plate 110 and the second electrode plate 111 have opposite polarities. In some embodiments, the first electrode plate 110 is a negative electrode plate, and the second electrode plate 111 is a positive electrode plate. When stacked together, the first electrode plate 110 and the second electrode plate 111 are separated by the separator 112, which ensures that the first electrode plate 110 and the second electrode plate 111 are isolated by the separator 112. The insulating film 12 has insulating properties. A first protective component is a component that isolates the electrode assembly 11 from the outside, and is also a component that covers the electrode assembly 11, which can seal and protect the electrode assembly 11. The winding ending section of the separator 112 refers to a section of the separator 112 away from a winding central axis. The winding ending section of the separator 112 is a section connected with the insulating film 12. The winding ending section of the separator 112 is a section, beyond the first electrode plate 110 and the second electrode plate 111, along a winding direction. The winding starting section of the insulating film 12 refers to a section of the insulating film 12 connected to the winding ending section of the separator 112, and is also a section of the insulating film 12 close to the winding central axis.

According to the technical solution of the embodiment of the present application, the insulating film 12 can play a role in sealing, protecting and insulating the electrode assembly 11. For example, the insulating film 12 may be a Mylar film. By connecting the winding starting section of the insulating film 12 to the winding ending section of the separator 112, the insulating film 12 can be wound with the electrode assembly 11 when wound and formed on the electrode assembly 11, such that the electrode assembly 11 is wrapped. Compared with a solution for separately wrapping the outside of the electrode assembly 11 with the insulating film 12, the manufacturing time of the battery cell 10 can be effectively shortened, and the production efficiency of the battery 100 is improved.

According to some embodiments of the present application, the winding starting section of the insulating film 12 is adhered to the winding ending section of the separator 112.

Adhesion refers to the insulating film 12 being connected to the separator 112 through materials with viscosity, such as a binder and an adhesive film. According to the technical solution of the embodiment of the present application, the separator 112 and the insulating film 12 can be conveniently and efficiently connected together in an adhesion manner, which can effectively improve the production efficiency of the battery 100.

According to some embodiments of the present application, referring to FIG. 3, the insulating film 12 is wound for at least one turn.

The insulating film 12 is wound for at least one turn, which means that the insulating film 12 is wound around the electrode assembly 11 for at least one complete turn. The number of turns may be one, one and a half, two, three, etc. In FIG. 3, the insulating film 12 is wound for more than one turn.

By winding the insulating film 12 around the electrode assembly 11 for at least one turn, the effects of insulating, sealing, and protecting the electrode assembly 11 by the insulating film 12 can be effectively ensured.

According to some embodiments of the present application, please refer to FIG. 3, the separator 112 includes a first separator 1120 and a second separator 1121, and the first electrode plate 110, the first separator 1120, the second electrode plate 111, and the second separator 1121 are stacked. A winding ending section of the second separator 1121 is located on an outer side of a winding ending section of the first separator 1120, and the winding starting section of the insulating film 12 is connected to the winding ending section of the second separator 1121.

The first electrode plate 110, the first separator 1120, the second electrode plate 111, and the second separator 1121 are stacked, which means that during the stacking process, the second electrode plate 111 is sandwiched between the first separator 1120 and the second separator 1121, while the first separator 1120 is sandwiched between the first electrode plate 110 and the second electrode plate 111. The winding ending section of the second separator 1121 is located on the outer side of the winding ending section of the first separator 1120, which means that after winding, the winding ending section of the second separator 1121 is located on the outermost side, and connected with the winding starting section of the insulating film 12. It is to be noted that the "outer side" is relative to the winding central axis.

The first electrode plate 110 and the second electrode plate 111 can be effectively isolated from the outside by the first separator 1120 and the second separator 1121, which ensures normal charging and discharging of the electrode assembly 11. The winding starting section of the insulating film 12 is connected to the winding ending section of the second separator 1121 located on the outer side, which can ensure that the insulating film 12 is smoothly wrapped around the outside of the electrode assembly 11, and ensures the smoothness of the outside of the battery cell 10, and the quality of the battery cell 10.

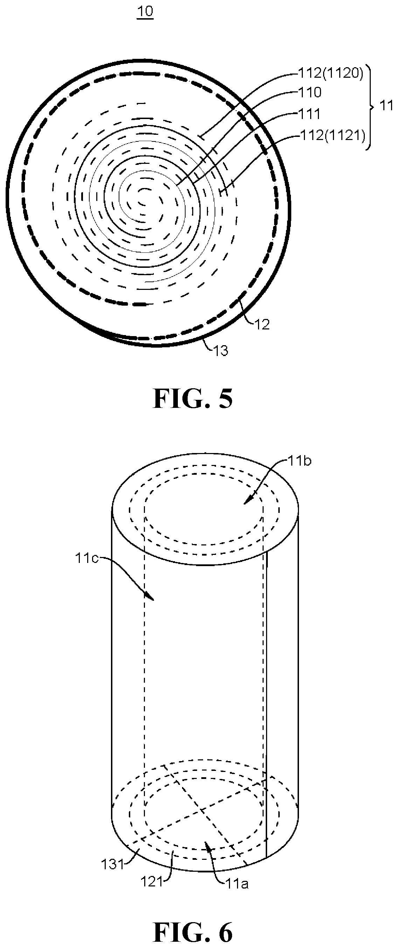

According to some other embodiments of the present application, FIG. 5 is a cross-sectional view of a battery cell 10 according to some other embodiments of the present application. A separator 112 includes a first separator 1120 and a second separator 1121, and a first electrode plate 110, the first separator 1120, a second electrode plate 111, and the second separator 1121 are stacked. A winding ending section of the first separator 1120 is located on an outer side of a winding ending section of the second separator 1121, and a winding starting section of an insulating film 12 is connected to the winding ending section of the first separator 1120.

The first electrode plate 110, the first separator 1120, the second electrode plate 111, and the second separator 1121 are stacked, which means that during the stacking process, the second electrode plate 111 is sandwiched between the first separator 1120 and the second separator 1121, while the first separator 1120 is sandwiched between the first electrode plate 110 and the second electrode plate 111. The winding ending section of the first separator 1120 is located on the outer side of the winding ending section of the second separator 1121, which means that the first separator 1120 is wound by an additional section compared to the second separator 1121, thereby making the winding ending section of the first separator 1120 extend beyond the winding ending section of the second separator 1121, located on the outermost side relative to the second separator 1121, and connected with the winding starting section of the insulating film 12.

The first electrode plate 110 and the second electrode plate 111 can be effectively isolated from the outside by the first separator 1120 and the second separator 1121, which ensures normal charging and discharging of the electrode assembly 11. The winding starting section of the insulating film 12 is connected to the winding ending section of the first separator 1120 located on the outer side, which can ensure that the insulating film 12 is smoothly wrapped around the outside of the electrode assembly 11, and ensures the smoothness of the outside of the battery cell 10, and the quality of the battery cell 10.

According to some embodiments of the present application, as shown in FIG. 3 and FIG. 4, the battery cell 10 further includes: a packaging film 13. The packaging film 13 is wound around the outside of the insulating film 12 by wrapping, and a winding starting section of the packaging film 13 is connected to insulating film 12. The insulating film 12 is configured to insulate and isolate the electrode assembly 11 and the packaging film 13.

The winding starting section of the packaging film 13 is marked with a symbol C in the figure. The packaging film 13 is a component with a certain structural strength, and has structural strength greater than that of the insulating film 12. For example, the packaging film 13 may be an aluminum-plastic film. As a component that covers the electrode assembly 11 wrapped with the insulating film 12, the packaging film 13 can serve as a shell of the battery cell 10 and play a role in packaging and protection. The winding starting section of the packaging film 13 refers to a section of the packaging film 13 connected to the insulating film 12, and is also a section of the packaging film 13 close to the winding central axis.

By connecting the winding starting section of the packaging film 13 with the insulating film 12, the insulating film 12 and the packaging film 13 can be wound with the electrode assembly 11 when the electrode assembly 11 is wound and formed, such that the electrode assembly 11 is wrapped. Compared with a solution for separately wrapping the insulating film 12 and separately packaging with the packaging film 13, the manufacturing time of the battery 100 can be effectively shortened, and the production efficiency of the battery 100 is improved. In this case, since the packaging film 13 is wrapped around the surface of the insulating film 12 in a winding manner, when the packaging film 13 is an aluminum-plastic film, the aluminum-plastic film forming process can be omitted, thereby effectively improving the production efficiency of the battery 100.

According to some embodiments of the present application, please refer to FIG. 4, the winding starting section of the packaging film 13 is connected to the winding ending section of the insulating film 12.

The winding ending section of the insulating film 12 is marked with a symbol D in the figure. The winding ending section of the insulating film 12 refers to a section of the insulating film 12 away from the winding central axis.

By connecting the winding starting section of the packaging film 13 with the winding ending section of the insulating film 12, the packaging film 13 can be wound around the surface of the insulating film 12 after the insulating film 12 is completely wound around the outside of the electrode assembly 11, thereby ensuring that the surface of the battery cell 10 is smooth without wrinkles.

Optionally, in some other embodiments, the winding starting section of the packaging film 13 and the insulating film 12 can be stacked, and the winding ending section of the packaging film 13 exceeds beyond starting and ending sections of the insulating film 12, and meanwhile, the packaging film 13 can be wrapped around the surface of the insulating film 12, thereby achieving the functions of packaging and protecting.

According to some embodiments of the present application, the winding starting section of the packaging film 13 is adhered to the insulating film 12.

Adhesion refers to the packaging film 13 being connected to the insulating film 12 through materials with viscosity, such as a binder and an adhesive film. The packaging film 13 and the separator 12 can be conveniently and efficiently connected together in an adhesion manner, which can effectively improve the production efficiency of the battery 100.

According to some embodiments of the present application, the packaging film 13 is wound for at least one turn.

By winding the packaging film 13 for at least one turn, the effect of protecting the insulating film 12 and the electrode assembly 11 through the packaging film 13 can be effectively guaranteed. Moreover, the more turns the packaging film 13 is wound, the better the protection effect on the insulating film 12 and the electrode assembly 11 becomes, thereby improving the structure strength of the battery cell 10. The insulating film 12 is wound for at least one turn, which means that the packaging film 13 is wound around the insulating film 12 for at least one complete turn. The number of turns may be one, one and a half, two, three, etc. In FIG. 3, the packaging film 13 is wound for more than one turn.

By winding the packaging film 13 for at least one turn, the effect of protecting the insulating film 12 and the electrode assembly 11 through the packaging film 13 can be effectively guaranteed. Moreover, the more turns the packaging film 13 is wound, the better the protection effect on the insulating film 12 and the electrode assembly 11 can be improved, thereby improving the structural strength of the battery cell 10. Meanwhile, the number of winding turns of the packaging film 13 is adjusted according to actual needs, and the volume of the battery cell 10 can be adjusted.

According to some embodiments of the present application, the winding ending section of the packaging film 13 is fixed to the surface of the packaging film 13 on its inner side.

The "inner side" is relative to the winding central axis, and the side of any layer of packaging film 13 near the winding central axis is the inner side of the layer of packaging film 13.

By fixing the winding ending section of the packaging film 13 to the surface of the packaging film 13 on its inner side, the packaging film 13, the insulating film 12, and the electrode assembly 11 are restrained, thereby ensuring that the battery cell 10 is not loosened, and guaranteeing the quality of the battery cell 10.

According to some embodiments of the present application, the winding ending section of the packaging film 13 is welded to the surface of the packaging film 13 on its inner side.

Welding may be laser welding. The packaging film 13 is connected to the surface of the packaging film 13 on its inner side in a welding manner, thereby ensuring a constraint effect and the quality of the battery cell 10. Optionally, the packaging film 13 may also be connected to the surface of the inner side by heat melting.

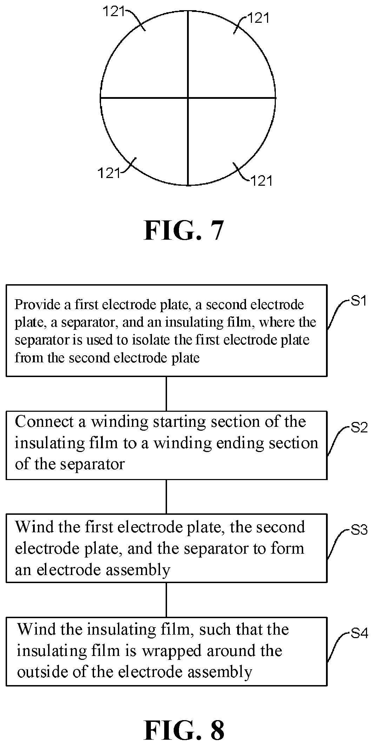

According to some embodiments of the present application, please combine FIG. 4, FIG. 6, and FIG. 7, FIG. 6 is a schematic diagram of a battery cell 10 according to some embodiments of the present application, and FIG. 7 is a schematic diagram of a plurality of first extension parts 121 according to some embodiments of the present application. The outline of an electrode assembly 11 is shown by dashed lines in FIG. 6. The electrode assembly 11 includes a first end face 11a, a second end face 11b, and an outer peripheral surface 11c. The first end face 11a and the second end face 11b are arranged oppositely along the winding axis direction of the electrode assembly 11; and an insulating film 12 includes an insulating film body 120 and the plurality of first extension parts 121 extending from the edge of the insulating film body 120. The insulating film body 120 covers the outer peripheral surface 11c, and the plurality of first extension parts 121 are continuously arranged along the edge of the insulating film body 120 and jointly cover the first end face 11a.

When the electrode assembly 11 is formed by winding, the insulating film 12 is wound together, such that the insulating film body 120 is wrapped around the outer peripheral surface 11c of the electrode assembly 11. After the insulating film body 120 is completely wound around the electrode assembly 11, the first extension parts 121 are bent to cover the first end face 11a of the electrode assembly 11. When not bent, the insulating film body 120 and the first extension parts 121 are located on the same plane. Since the first end face 11a of the electrode assembly 11 is perpendicular to the outer peripheral surface 11c of the electrode assembly 11, when the insulating film body 120 is wound around the outer peripheral surface 11c, the first extension parts 121 need to be bent to cover the first end surface 11a. The first end face 11a may be a bottom surface or a top surface of the electrode assembly 11, and the second end face 11b may be the bottom surface or the bottom surface of the electrode assembly 11. That is, all the first extension parts 121 can jointly cover the bottom surface or the top surface of the electrode assembly 11, so as to seal, protect, and insulate the bottom surface or the top surface of the electrode assembly 11.

After the insulating film 12 is wound around the outside of the electrode assembly 11, the plurality of first extension parts 121 are bent and arranged relative to each other, thereby jointly covering the first end face 11a of the electrode assembly 11, isolating the first end face 11a of the electrode assembly 11 from the outside, sealing, protecting, and insulating the electrode assembly 11, preventing external materials from influencing the electrode assembly 11, and ensuring safety of the electrode assembly 11.

According to some embodiments of the present application, as shown in FIG. 7, each first extension part 121 is triangular, and the plurality of first extension parts 121 are spliced into a circular plane.

The plurality of triangular first extension parts 121 are bent to jointly form the circular plane so as to correspond to the shape of the first end face 11a. The side length of the triangle may be equal to the radius of the first end face 11a. As shown in FIG. 7, the number of the first extension parts 121 in this embodiment is four. In other embodiments, the number of the first extension parts 121 is determined according to actual needs.

The electrode assembly 11 is formed by winding, the first end face 11a of the electrode assembly 11 is circular, and pointed ends of the triangular first extension parts 121 are bent towards the center of the first end face 11a to form a circle to effectively cover the first end face 11a of the electrode assembly 11, thereby ensuring protection, sealing, and insulation effects on the electrode assembly 11. By setting the first extension part 121 as a triangle (the triangle is a shape obtained by dividing, from the circle center, the circle along the radial direction), and compared with solutions for setting the first extension part 121 as other shapes, the difficulty of covering the first end face 11a after the bending of the first extension part 121 can be effectively reduced.

According to some embodiments of the present application, as shown in FIG. 4, the packaging film 13 includes a packaging film body 130 and a plurality of second extension parts 131 extending from the edge of the packaging film body 130. The packaging film body 130 covers the insulating film body 120. The plurality of second extension parts 131 are continuously arranged along the edge of the packaging film body 130 and jointly cover the plurality of first extension parts 121.

When the electrode assembly 11 is formed by winding, the insulating film 12 and the packaging film 13 are wound together, such that the insulating film body 120 is wrapped around the outer peripheral surface 11c of the electrode assembly 11, and the packaging film body 130 covers the surface of the insulating film body 120. After the packaging film body 130 is completely wound around the insulating film body 120, the second extension parts 131 are bent towards the first extension parts 121 to cover the first extension parts 121.

After the packaging film 13 is wound around the surface of the insulating film 12, the plurality of second extension parts 131 are bent and arranged relative to each other so as to jointly cover all the first extension parts 121, thereby isolating the first end face 11a and the first extension parts 121 of the electrode assembly 11 from the outside, sealing and protecting the electrode assembly 11 and the insulating film 12, preventing the external materials from influencing the electrode assembly 11, and ensuring safety of the battery cell 10.

According to some embodiments of the present application, as shown in FIG. 4, each second extension part 131 is triangular, and the plurality of second extension parts 131 are spliced into a circular plane.

The plurality of triangular second extension parts 131 are bent together to form the circular plane so as to correspond to the shape of the plane formed by all the first extension parts 121. The side length of the triangle may be equal to the radius of the circular plane formed by all the first extension parts 121. The number of the second extension parts 131 in this embodiment is four. In other embodiments, the number of the first extension parts 121 is determined according to actual needs.

The battery cell 10 is formed by winding, the first end face 11a is circular, and the shape, corresponding to the first end face 11a, formed by splicing the plurality of first extension parts 121 is circular as well. Pointed ends of the plurality of triangular second extension parts 131 are all bent towards the center of the first end face 11a to form a circle so as to effectively cover the first extension parts 121, thereby effectively protecting the first extension parts 121 and ensuring safety of the battery cell 10. By setting the second extension part 131 as a triangle (the triangle is a shape obtained by dividing, from the circle center, the circle along the radial direction), and compared with solutions for setting the second extension part 131 as other shapes, the difficulty of covering the first extension part 121 after the bending of the second extension part 131 can be effectively reduced.

According to some embodiments of the present application, two adjacent first extension parts 121 are welded to each other; and/or two adjacent second extension parts 131 are welded to each other.

The two adjacent first extension parts 121 are welded, which means that after the first extension part 121 is bent, the two adjacent first extension parts 121 need to be connected to each other. In this embodiment, welding is used for the connection, such that the plane formed by splicing all the first extension parts 121 is a complete and seamless plane. Welding may be laser welding.

Similarly, the two adjacent second extension parts 131 are welded, which means that after the second extension part 131 is bent, the two adjacent first extension parts 121 need to be connected to each other. In this embodiment, welding is used for the connection, such that the plane formed by splicing all the second extension parts 131 is a complete and seamless plane. Welding may be laser welding.

The two adjacent first extension parts 121 are connected through welding, which not only improves the efficiency of the mutual connection of the first extension parts 121 but also ensures the connection strength between the two adjacent first extension parts 121, thereby ensuring the effects of protecting and sealing the first end face 11a by the first extension parts 121. The two adjacent second extension parts 131 are connected through welding, which not only improves the connection efficiency of the second extension parts 131 but also ensures the connection strength between the two adjacent second extension parts 131, thereby ensuring the effect of protecting the first extension parts 121 by the second extension parts 131.

Optionally, the two adjacent first extension parts 121 may be connected to each other by heat melting. The two adjacent second extension parts 131 may be connected to each other by heat melting.

According to some embodiments of the present application, the present application further provides a battery 100 including the battery cell 10 described above.

According to some embodiments of the present application, the present application further provides an electrical device, including the battery 100 described above, and the battery 100 is used to provide electric energy.

According to some embodiments of the present application, please refer to FIG. 8, and FIG. 8 is a flowchart of a method for manufacturing a battery cell 10 according to some embodiments of the present application. The present application further provides a method for manufacturing a battery cell 10. The manufacturing method includes:
S1: Provide a first electrode plate 110, a second electrode plate 111, a separator 112, and an insulating film 12, where the insulating film 112 is used to isolate the first electrode plate 110 from the second electrode plate 111;
S2: Connect a winding starting section of the insulating film 12 to a winding ending section of the separator 112;
S3: Wind the first electrode plate 110, the second electrode plate 111, and the separator 112 to form an electrode assembly 11;
S4: Wind the insulating film 12, such that the insulating film 12 is wrapped around the outside of the electrode assembly 11.

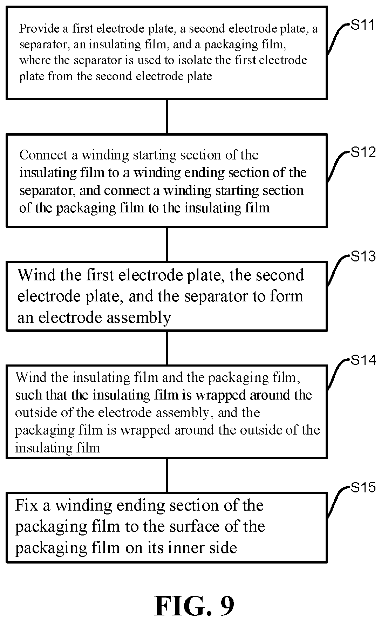

According to some embodiments of the present application, please refer to FIG. 9, and FIG. 9 is a flowchart of a method for manufacturing a battery cell 10 according to some embodiments of the present application. The present application further provides a method for manufacturing a battery cell 10. The manufacturing method includes:
S11: Provide a first electrode plate 110, a second electrode plate 111, a separator 112, an insulating film 12, and a packaging film 13, where the separator 112 is used to isolate the first electrode plate 110 from the second electrode plate 111;
S12: Connect a winding starting section of the insulating film 12 to a winding ending section of the separator 112, and connect a winding starting section of the packaging film 13 to the insulating film 12;
S13: Wind the first electrode plate 110, the second electrode plate 111, and the separator 112 to form an electrode assembly 11;
S14: Wind the insulating film 12 and the packaging film 13, such that the insulating film 12 is wrapped around the outside of the electrode assembly 11, and the packaging film 13 is wrapped around the outside of the insulating film 12;
S15: Fix a winding ending section of the packaging film 13 to the surface of the packaging film 13 on its inner side.

According to some embodiments of the present application, the present application further provides a battery cell 10. The battery cell 10 is a cylindrical pouch cell. The battery cell 10 includes an electrode assembly 11, an insulating film 12, and a packaging film 13. The insulating film 12 is a Mylar film, and the packaging film 13 is an aluminum-plastic film. The electrode assembly 11 includes a first electrode plate 110, a first separator 1120, a second electrode plate 111, and a second separator 1121. The first electrode plate 110, the first separator 1120, the second electrode plate 111, and the second separator 1121 are stacked and wound to form the electrode assembly 11. A winding ending section of the second separator 1121 is located an outer side of a winding ending section of the first separator 1120. The electrode assembly 11 includes a first end face 11a, a second end face 11b, and an outer peripheral surface 11c. The first end face 11a and the second end face 11b are arranged oppositely along the winding axis direction of the electrode assembly 11. The insulating film 12 includes an insulating film body 120 and a plurality of first extension parts 121 extending from the edge of the insulating film body 120. The first extension parts 121 are triangular, and a winding starting section of the insulating film body 120 is connected with the winding ending section of the second separator 1121. The packaging film 13 includes a packaging film body 130 and a plurality of second extension parts 131 extending from the edge of the packaging film body 130. The second extension parts 131 are triangular. A winding starting section of the packaging film body 130 is connected with a winding ending section of the insulating film body 120. The insulating film body 120 is wound around the outer peripheral surface 11c of the electrode assembly 11 by wrapping, and the packaging film body 130 is wound around and covers the surface of the insulating film body 120. The plurality of first extension parts 121 are continuously arranged along the edge of the insulating film body 120 and spliced to form a plane, thereby jointly covering the first end face 11a. The plurality of second extension parts 131 are continuously arranged along the edge of the packaging film body 130 and spliced to form a plane, thereby jointly covering the plane formed by splicing the plurality of first extension parts 121.

According to some embodiments of the present application, the present application further provides a method for manufacturing a cylindrical pouch cell. The manufacturing method includes:
a first electrode plate 110, a first separator 1120, a second electrode plate 111, a second separator 1121, an insulating film 12 (the insulating film 12 is a Mylar film), and a packaging film 13 (the packaging film 13 is an aluminum-plastic film) are provided. The insulating film 12 includes an insulating film body 120 and a plurality of first extension parts 121 extending from the edge of the insulating film body 120, and the first extension parts 121 are triangular. The packaging film 13 includes a packaging film body 130 and a plurality of second extension parts 131 extending from the edge of the packaging film body 130, and the second extension parts 131 are triangular.

The second separator 1121, the insulating film body 120, and the packaging film body 130 are connected by adhesion.

Winding is performed. In the early stage of the winding stage, the first electrode plate 110, the first separator 1120, the second electrode plate 111, and the second separator 1121 of the battery cell are wound. After reaching the standard to form the electrode assembly 11, the first electrode plate 110, the first separator 1120, the second electrode plate 111, and the second separator 1121 are cut off. Winding of the insulating film 12 and the packaging film 13 is started. After winding for a certain number of turns, the first extension parts 121 and the second extension parts 131 are bent, and several layers of the packaging film 13 is wrapped around the insulating film 12 and the electrode assembly 11. The connection of the first extension parts 121, the packaging film body 130, and the second extension parts 131 is completed respectively by hot melting or laser welding, that is, the welding of a peripheral surface and bottom of the cylindrical pouch cell is completed.

The above contents are merely preferred embodiments of the present application and are not used to limit the present application, and the present application can be variously modified and changed for those skilled in the art. Any modification, equivalent replacement, improvement, etc. made within the spirit and principle of the present application shall fall within the scope of protection of the present application.

## Claims

1. A battery cell, comprising:
an electrode assembly, wherein the electrode assembly is of a winding structure, the electrode assembly comprises a first electrode plate, a second electrode plate, and a separator, and the separator is used to isolate the first electrode plate from the second electrode plate; and
an insulating film, wherein the insulating film is wound around the outside of the electrode assembly by wrapping, and a winding starting section of the insulating film is connected to a winding ending section of the separator.

2. The battery cell according to claim 1, wherein
the winding starting section of the insulating film is adhered to the winding ending section of the separator.

3. The battery cell according to claim 1 or 2, wherein
the insulating film is wound for at least one turn.

4. The battery cell according to any one of claims 1 to 3, wherein
the separator comprises a first separator and a second separator, the first electrode plate, the first separator, the second electrode plate, and the second separator are stacked, a winding ending section of the first separator is located on an outer side of a winding ending section of the second separator, and the winding starting section of the insulating film is connected to the winding ending section of the first separator.

5. The battery cell according to any one of claims 1 to 3, wherein
the separator comprises a first separator and a second separator, the first electrode plate, the first separator, the second electrode plate, and the second separator are stacked, a winding ending section of the second separator is located on an outer side of a winding ending section of the first separator, and the winding starting section of the insulating film is connected to the winding ending section of the second separator.

6. The battery cell according to any one of claims 1 to 5, wherein
the battery cell further comprises:
a packaging film, wherein the packaging film is wound around the outside of the insulating film by wrapping, a winding starting section of the packaging film is connected to the insulating film, and
the insulating film is configured to insulate and isolate the electrode assembly and the packaging film.

7. The battery cell according to claim 6, wherein
the winding starting section of the packaging film is connected to the winding ending section of the insulating film.

8. The battery cell according to claim 6 or 7, wherein
the winding starting section of the packaging film is adhered to the insulating film.

9. The battery cell according to any one of claims 6 to 8, wherein
the packaging film is wound for at least one turn.

10. The battery cell according to any one of claims 6 to 9, wherein
a winding ending section of the packaging film is fixed to the surface of the packaging film on its inner side.

11. The battery cell according to claim 10, wherein
the winding ending section of the packaging film is welded to the surface of the packaging film on its inner side.

12. The battery cell according to any one of claims 6 to 11, wherein
the electrode assembly comprises a first end face, a second end face, and an outer peripheral surface, and the first end face and the second end face are arranged oppositely along the winding axis direction of the electrode assembly; and
the insulating film comprises an insulating film body and a plurality of first extension parts extending from the edge of the insulating film body, the insulating film body covers the outer peripheral surface, and the plurality of first extension parts are continuously arranged along the edge of the insulating film body and jointly cover the first end face.

13. The battery cell according to claim 12, wherein
each first extension part is triangular, and the plurality of first extension parts are spliced into a circular plane.

14. The battery cell according to claim 12 or 13, wherein
the packaging film comprises a packaging film body and a plurality of second extension parts extending from the edge of the packaging film body, the packaging film body covers the insulating film body, and the plurality of second extension parts are continuously arranged along the edge of the packaging film body and jointly cover the plurality of first extension parts.

15. The battery cell according to claim 14, wherein
each second extension part is triangular, and the plurality of second extension parts are spliced into a circular plane.

16. The battery cell according to claim 14 or 15, wherein
two adjacent first extension parts are welded to each other; and/or
two adjacent second extension parts are welded to each other.

17. A battery, comprising the battery cell according to any one of claims 1 to 16.

18. An electrical device, comprising the battery according to claim 17, wherein the battery is used to provide electric energy.

19. A method for manufacturing a battery cell, wherein the manufacturing method comprises:
providing a first electrode plate, a second electrode plate, a separator, and an insulating film, wherein the separator is used to isolate the first electrode plate from the second electrode plate;
connecting a winding starting section of the insulating film to a winding ending section of the separator;
winding the first electrode plate, the second electrode plate, and the separator to form an electrode assembly; and
winding the insulating film to make the insulating film be wrapped around the outside of the electrode assembly.

20. A method for manufacturing a battery cell, wherein the manufacturing method comprises:
providing a first electrode plate, a second electrode plate, a separator, an insulating film, and a packaging film, wherein the separator is used to isolate the first electrode plate from the second electrode plate;
connecting a winding starting section of the insulating film to a winding ending section of the separator, and connecting a winding starting section of the packaging film to the insulating film;
winding the first electrode plate, the second electrode plate, and the separator to form an electrode assembly;
winding the insulating film and the packaging film to make the insulating film be wrapped around the outside of the electrode assembly, and make the packaging film be wrapped around the outside of the insulating film; and
fixing a winding ending section of the packaging film to the surface of the packaging film on its inner side.
